# EUROPÄISCHE PATENTSCHRIFT

(11) **EP 2 258 566 B1**
(45) Veröffentlichungstag und Bekanntmachung des Hinweises auf die Patenterteilung: **21.12.2011**
(21) Anmeldenummer: 10450096.2
(22) Anmeldetag: 02.06.2010
(51) Int. Cl.: B60C 27/08, F16G 13/12

(54) **Kettenglied für eine Gleitschutzkette**
Chain link for an anti-skid chain
Articulation de chaîne pour une chaîne antidérapante

(30) Priorität: 03.06.2009 AT 8562009
(43) Veröffentlichungstag der Anmeldung: 08.12.2010
(73) Patentinhaber: Pewag Schneeketten GmbH & Co KG, 9371 Brückl (AT)
(72) Erfinder: Pengg, Agyd, 9020 Klagenfurt (AT); Schmid, Karl, 9371 Brückl (AT)
(74) Vertreter: Matschnig, Franz

(56) Entgegenhaltungen:
- DE-C1- 4 333 262
- DE-U1- 9 215 693
- DE-U1- 20 113 284

## Beschreibung

Die Erfindung betrifft ein Kettenglied für eine Gleitschutzkette, wobei das Kettenglied als gerades Kettenglied mit im Wesentlichen ovaler Form mit einer oberen und einer unteren Längsseite ausgeführt ist.

Die Erfindung betrifft weiters eine Gleitschutzkette für Fahrzeugreifen mit einem Laufnetz, welches Kettenelementkonfigurationen enthält, die abwechselnd aus länglichen stehenden Kettengliedern und in Ausnehmungen derselben eingreifenden liegenden Kettengliedern bestehen, wobei stehend und liegend in Bezug auf eine Lauffläche des Fahrzeugreifens zu verstehen ist.

Im Bereich der Gleitschutzketten, die üblicherweise aus in Form eines Laufnetzes angeordneten Kettengliedern bestehen, verwendet man bei Kettengliedern verschiedene Profilformen. Die folgenden Ausführungen beziehen sich dabei in erster Linie auf herkömmliche gerade Kettenglieder mit ovaler Form. Unter geraden Kettengliedern sind hier solche zu verstehen, deren Längsseiten mit einer Längsmittelachse in einer Ebene liegen.

Eine häufig am Markt vertretene Profilform ist die Rundgliederkette, bei der die Kettenglieder einen runden Querschnitt aufweisen. Eine solche Variante zeigt beispielsweise die DE 21 66 881. Weiters finden sich im Stand der Technik Vierkantketten, deren Kettenglieder im Wesentlichen ein rechteckiges oder quadratisches Profil aufweisen.

Die am häufigsten verwendete Profilform bei Ketten ist die spezielle Vierkantkette, deren Kettenglieder außen ein Vierkantprofil aufweisen und innen mit einer runden Profilform ausgeführt sind. Unter "außen" ist hier der nach außen gerichtete Bereich der Kettenglieder zu verstehen, während "innen" den inneren Bereich, also quasi das Innere des Ovals des Kettenglieds (bzw. das Auge des Kettenglieds) bezeichnet. Die umgekehrte Variante, wonach der Querschnitt nach außen u-förmig ist, zeigt die DE 92 15 693 U1.

Die genannten Kettentypen werden zur Erhöhung der Lebensdauer und der Effektivität als Gleitschutz zusätzlich mit Verschleißteilen wie Stummeln, Stacheln oder Bügeln ausgeführt. Dadurch erhöht sich einerseits die Lebensdauer, weil die Belastung der Kettenglieder teilweise auf die Verschleißteile überwälzt wird. Andererseits erhöht sich dank der so ergänzten Gleitschutzkette das Haftvermögen bzw. der Grip zur Fahrbahn hin - der Schlupf zum Untergrund verringert sich deutlich und geht nahezu auf Null zurück.

Beispiele für solche Kettentypen zeigen die DE 43 33 262 C1, die AT 376 177 und die US 5,423,365.

Allerdings kommt es zu einem Schlupf zwischen Reifen und Laufnetzinnenseite (also der dem Reifen zugewandten Seite des Laufnetzes, die üblicherweise keine Verschleißteile aufweist). Im Extremfall kann es dabei zu solchen Kräften kommen, dass die Kettenglieder eine Scherwirkung auf das Reifenprofil entwickeln und die Reifen beschädigt werden, was besonders bei den reinen Vierkantketten ein Problem ist.

Eine solche Scherwirkung ist naturgemäß bei Ketten mit Rundgliedem am Geringsten. Allerdings sind die Rundglieder auch sehr beweglich gegeneinander, was im Fahrbetrieb und bei höheren Belastungen zu Schrägstellungen der Kettenglieder führt, wodurch die Greifwirkung zur Fahrbahn abgemindert wird - beispielsweise, weil die Verschleißteile nicht mehr im optimalen Kontakt mit der Fahrbahn sind.

Bei den speziellen Vierkantketten, die außen ein eckiges und innen ein rundes Profil aufweisen, kommt es zu einer besseren Greifwirkung mit der Fahrbahn, da sich die Kanten des Vierkantprofils auf der Außenseite der Kettenglieder mit dem Reifenprofil verhaken und daher zu einer unmittelbaren Kraftübertragung vom Reifen auf den Untergrund beitragen. Allerdings haben Ketten mit einem solchen speziellen Vierkantprofil durch die runde Profilausführung auf den Innenseiten eine gewisse Gelenkigkeit, sodass die Kettenglieder zum Kippen neigen und dann bei Belastung die Kette über die Reifenoberfläche rutscht. Dieses Rutschen kann dann wieder zu Schäden am Reifenprofil, jedenfalls aber zu zusätzlicher Abnutzung führen. Außerdem ist die Traktion im Fahrbetrieb durch dieses Schrägstellen der Kettenglieder ähnlich wie bei Rundgliederketten schlecht.

Vierkantketten, die innen und außen ein eckiges Profil aufweisen, weisen eine sehr geringe Schlupfneigung auf, da die Kettenglieder gegeneinander als auch dem Reifenprofil gegenüber wenig beweglich sind. Eine solche Kette erweist sich als sehr steifes Gebilde, wobei es einerseits bei Belastung zu hohen Kräften zwischen den Kettengliedern kommt, andererseits eine Beschädigung des Reifenprofils droht. So eine Kette ist aus der gattungsgemäßen DE 20113284 U1 bekannt.

Es ist eine Aufgabe der Erfindung, ein Kettenglied mit einer Profilform zu schaffen, die die oben genannten Nachteile des Standes der Technik ausräumt und gleichzeitig bei Anwendung in einer Gleitschutzkette auf einem Fahrzeugreifen nicht zu Reifenschäden führt.

Diese Aufgabe wird mit einem Kettenglied der oben genannten Art erfindungsgemäß dadurch gelöst, dass ein äußerer Querschnittsbereich des Querschnitts des Kettenglieds halbrund ausgeführt ist und ein innerer Querschnittsbereich eckig ausgeführt ist.

Dank der Erfindung werden einerseits Reifenoberflächen geschont, weil die ihnen zugewandte Seite halbrund ausgeführt ist. Andererseits können die Kettenglieder durch die eckige Ausführung ihres Inneren optimal mit anderen Kettengliedern zu Gleitschutzketten kombiniert werden, die besonders verwindungssteif sind und bei Belastung gut mit der Fahrbahn in Kontakt bleiben und so den Grip zwischen Kette und Fahrbahn erhöhen.

In einer Variante der Erfindung weist der innere Querschnittsbereich eine sich beiderseits einer Mittenebene erstreckende flache Seite auf, die im Wesentlichen normal auf die Mittenebene des Kettenglieds orientiert ist und die beiderseits von einer Kante begrenzt ist. Der innere Querschnittsbereich des Kettenglieds (also der eckige Profilbereich des Kettenglieds, der gegen das Innere des Kettenglieds orientiert ist) sieht dabei im Detail so aus, dass das Profil aus dem halbrunden äußeren Querschnittsbereich über Kanten in einen flachen Bereich bzw. eine flache Seite übergeht, was in den vorliegenden Ausführungen als eckiges Profil bezeichnet wird. Kanten bezeichnen hier Gerade, die entlang des Kettengliedstranges verlaufen und im Bereich der Längsseiten parallel zu einer Längsmittelachse des Kettenglieds orientiert sind. Es handelt sich dabei nicht ausschließlich um scharfe, rechteckige Kanten, vielmehr werden so auch Übergänge mit größeren oder kleineren Radien bezeichnet.

Der flache Bereich bzw. die flache Seite ist normal auf die Mittenebene des Kettenglieds angeordnet, wobei er/sie entlang der oberen und unteren Längsseiten des Kettenglieds im Wesentlichen parallel zu einer Längsmittelachse orientiert ist.

In einer weiteren Variante der Erfindung schließt der innere Querschnittsbereich des Kettenglieds beiderseits einer Mittenebene an einer ersten Kante mit einem hinsichtlich der Mittenebene abgeschrägten Bereich an einen parallel zur Mittenebene des Kettenglieds orientierten Bereich an, wobei der abgeschrägte Bereich einen Winkel kleiner 90° mit der Mittenebene einnimmt, und an den abgeschrägten Bereich an einer zweiten Kante eine flache Seite anschließt, die im Wesentlichen normal auf die Mittenebene des Kettenglieds orientiert ist. Das bedeutet, dass der halbrunde Querschnittsbereich an einer ersten Kante in einen abgeschrägten Bereich übergeht, der mit der Mittenebene einen spitzen Winkel einschließt, und dieser abgeschrägte Bereich mit einer zweiten Kante an eine flache Seite anschließt, die im Wesentlichen normal auf die Mittenebene des Kettenglieds orientiert ist. Eine solche Kettenform lässt sich sehr gut fertigen, durch die genannten Übergänge zwischen äußerem und inneren Querschnittsbereich tritt weiters bei Belastung weniger Abnutzung auf, da es keine rechtwinkeligen Kanten gibt, die sich bei gegenseitiger Bewegung von Kettengliedern abscheren könnten.

Vorteilhafterweise ist an der oberen Längsseite des Kettenglieds zumindest ein Verschleißteil angeordnet. Dank des Verschleißteils wird der Grip zwischen Kettenglied und Fahrbahn erhöht, gleichzeitig wird die Lebensdauer der Kettenglieder erhöht, da bei Belastung der Kettenglieder durch schwierige Fahrbahnverhältnisse überwiegend die Verschleißteile und nicht die Kettenglieder gefordert werden. Dank der erfindungsgemäßen Profilform legt sich der Kettensteg durch die Steifigkeit in der Gliedinnenrundung nicht schräg und die angebrachten Verschleißteile bringen optimale Traktion im Fahrbetrieb.

In einer Variante der Erfindung weist das Verschleißteil an seiner dem Kettenglied zugewandten Seite ein halbrundes Profil auf und weist an seiner von dem Kettenglied abgewandten Seite eine flache Profilform auf, die im Wesentlichen normal auf die Mittenebene des Kettenglieds orientiert ist. Das Profil des Verschleißteils ist also gewissermaßen eine Spiegelung des Querschnitts des Kettenglieds. Dadurch lässt sich mittels des Verschleißteils im Fall einer Verwendung in einer Gleitschutzkette (bzw. allgemein in einer Fahrzeugkette) ein besonders guter Grip zwischen Kettenglied und Fahrbahn erreichen.

In einer vorteilhaften Variante ist das zumindest eine Verschleißteil in Form eines Bolzens ausgeführt. Ein Bolzen kann dabei beispielsweise mit einem runden, eckigen oder polygonförmigen Querschnitt ausgeführt sein. Das Verschleißteil kann auch andere Ausformungen haben, beispielsweise Bügel, Noppen, Stacheln mit unterschiedlichen Profilformen oder ähnliches. Grundsätzlich können auch verschiedene Verschleißteilarten kombiniert werden. Grundsätzlich sind bolzenförmige Verschleißteile einfach herzustellen und lassen sich gut, beispielsweise durch Schweißverbindungen, an dem Kettenglied anordnen.

Günstigerweise ist das Verschleißteil in gegen eine Mittenebene des Kettenglieds geneigter Weise angeordnet. Durch eine geneigte Anordnung des Verschleißteils bzw. der Bolzen wird auch bei geringster belastungsbedingter Verdrehung der Gleitschutzkette, deren Teil das erfindungsgemäße Kettenglied ist, eine gute Traktion der Kettenglieder ermöglicht.

Die oben genannte Aufgabe wird weiters mit einer Gleitschutzkette der eingangs erwähnten Art erfindungsgemäß dadurch gelöst, dass die Gleitschutzkette stehende Kettenglieder entsprechend der oben genannten Erfindung aufweist. Die Vorteile dieser Gleitschutzkette wurden anhand des erfindungsgemäßen Kettenglieds diskutiert.

Günstigerweise weist zumindest eines der stehenden Kettenglieder der Gleitschutzkette ein Verschleißteil auf.

In einer vorteilhaften Variante der Erfindung ist über einem zwischen zwei stehenden Kettengliedern angeordneten liegenden Kettenglied ein weiteres querstehendes Kettenglied angeordnet, dessen Mittenebene normal auf die Mittenebene der stehenden Kettenglieder orientiert ist. Dadurch wird in der Kette ein zusätzliches Element vorgesehen, dass das Traktionsverhalten der Kette weiter verbessert.

Besonders vorteilhaft ist es, wenn das querstehende Kettenglied zumindest ein Verschleißteil aufweist. Dadurch lässt sich der Grip der Kette verbessern.

Im Folgenden wird die Erfindung anhand eines nicht einschränkenden Ausführungsbeispiels, das in der Zeichnung dargestellt ist, näher erläutert. In dieser zeigt schematisch:
Fig. 1 eine perspektivische Ansicht eines erfindungsgemäßen Kettenglieds,
Fig. 1a den Querschnitt des erfindungsgemäßen Kettenglieds,
Fig. 2a eine Seitenansicht des Kettenglieds der Fig. 1 in Richtung auf seine Mittenebene,
Fig. 2b eine Schnittansicht des Kettenglieds der Fig. 1 entlang der Linie A-A in Fig. 2a,
Fig. 3 eine perspektivische Ansicht einer Variante des erfindungsgemäßen Kettenglieds mit einem Verschleißteil,
Fig. 4a eine Stirnansicht des Kettenglieds der Fig. 3,
Fig. 4b eine Ansicht des Kettenglieds der Fig. 3 in Richtung entlang seiner Längsmittelachse,
Fig. 5 eine perspektivische Ansicht eines Teils einer Gleitschutzkette, bestehend aus erfindungsgemäßen Kettengliedern mit Verschleißteil,
Fig. 6a der Kettenteil der Fig. 5 in einer Ansicht in Richtung auf die Mittenebene der aufrechten Kettenglieder, und
Fig. 6b eine Draufsicht auf eine Kette gemäß Fig. 5, in Richtung auf die Mittenebene des dargestellten liegenden Kettenglieds.

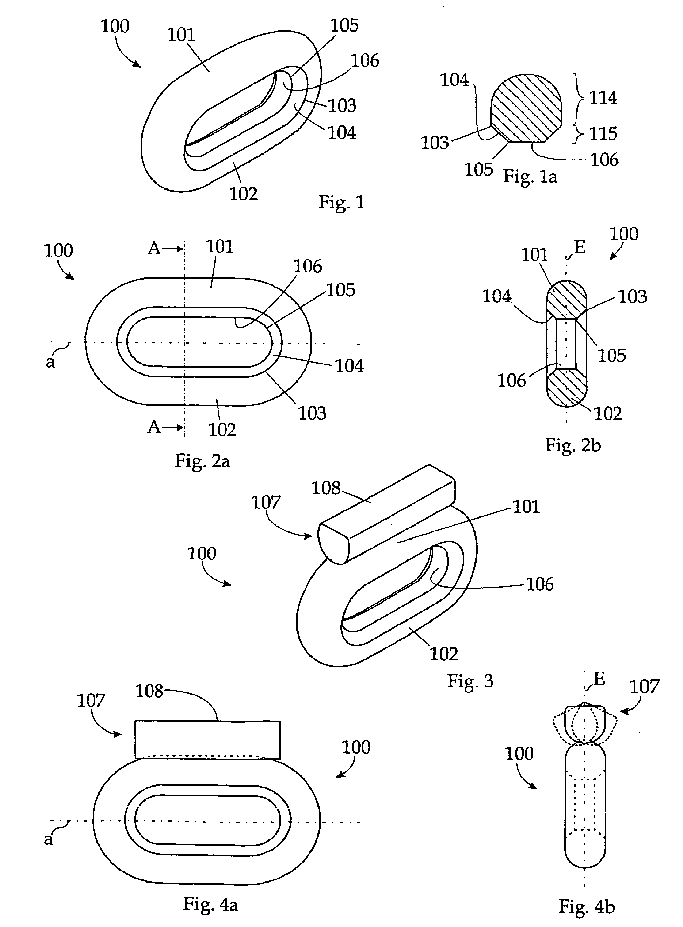

Fig. 1 zeigt eine perspektivische Darstellung eines Kettenglieds 100 gemäß der Erfindung. Es handelt sich dabei um ein gerades Kettenglied 100 in ovaler Form. Das Kettenglied 100 weist eine obere 101 und eine untere Längsseite 102 auf, wobei oben und unten hier gemäß der Darstellung in Fig. 1 zu verstehen ist. Parallel zu den Längsseiten 101, 102 verläuft eine Längsmittelachse a durch die Krümmungsmittelpunkte des Kettenglieds unter der Berücksichtigung der ovalen Form des Kettenglieds 100.

Unter einem gerade Kettenglied 100 ist hier ein solches zu verstehen, bei dem die Längsseiten 101, 102 und die Längsmittelachse a in einer gemeinsamen Ebene liegen. Diese Ebene wird als Mittenebene E (siehe Beschreibung Fig. 2a bzw. Fig. 2b) bezeichnet.

Die Besonderheit des erfindungsgemäßen Kettenglieds 100 liegt darin, dass es ein spezielles Profil aufweist. In Fig. 1 ist zu erkennen, dass der äußere Querschnittsbereich des Kettenglieds 100 abgerundet ist, also ein halbrundes Profil aufweist. An der Innenseite des Kettenglieds 100 hingegen ist der innere Querschnittsbereich eckig ausgeführt. Der Querschnitt geht also an einer ersten Kante 103 in einen im Vergleich zur Außenseite abgeschrägten Bereich 104 über, der an einer zweiten Kante 105 in eine flache Seite 106 übergeht, die im Wesentlichen normal auf die Mittenebene E und im Bereich der Längsseiten 101, 102 parallel zur Längsmittelachse a orientiert ist. Die flache Seite 106 erstreckt sich dabei beiderseits der Mittenebene E. Allgemein ist die flache Seite 106 - die sich über die gesamte Innenseite des Kettenglieds 100, auch in den Übergangsbereichen zwischen den Längsseiten 101, 102, erstreckt - normal auf die Mittenebene E orientiert. Der abgeschrägte Bereich 104 schließt mit der Mittenebene E des Kettenglieds 100 einen spitzen Winkel, bzw. einen Winkel kleiner 90°, ein.

Die gesamte Ausdehnung der flachen Seite 106 in einer Richtung normal auf die Mittenebene E (aber beiderseits der Mittenebene E, da sich ja die flache Seite 106 beiderseits der Mittenebene E erstreckt) ist dabei zumindest halb so groß wie der Durchmesser des Profilquerschnitts.

Fig. 1a zeigt eine Detailansicht des Querschnitts des erfindungsgemäßen Kettenglieds, mit dem äußeren Querschnittsbereich 114, der über eine erste Kante 103 an den inneren Querschnittsbereich 115 anschließt, der einen abgeschrägten Bereich 104 aufweist, der wiederum über eine zweite Kante 105 an die flache Seite 106 anschließt. Fig. 1a und die anderen Figuren zeigen dabei mit dem abgeschrägten Bereich 104 eine spezielle Ausführungsform der Erfindung - grundsätzlich kann der äußere Querschnittsbereich 114 über eine einfache Kante 103, 105, die sich dann entlang des ganzen Kettengliedstrangs zieht, in die flache Seite 106 übergehen. Ein abgeschrägter Teil 104 kann optional vorgesehen sein, um den Übergang zwischen äußerem 114 und inneren Querschnittsbereich 115 abzustufen.

Fig. 2a zeigt eine Sicht des Kettenglieds 100 aus Fig. 1 in Richtung seiner Mittenebene E, die in der vorliegenden Figur in der Blattebene liegt. Zwar ist die Ausführung des Profils hier nicht zu erkennen, allerdings zeigt Fig. 2a die erste 103 und die zweite Kante 105 sowie die Tatsache, dass die flache Seite 106 im Bereich der Längsseiten 101, 102 tatsächlich normal auf die Mittenebene E orientiert ist.

Fig. 2b zeigt einen Schnitt des erfindungsgemäßen Kettenglieds 100 entlang einer Linie A-A in Fig. 2a, wobei die Ansicht entlang seiner Längsmittelachse a erfolgt. Hier sind der abgeschrägte Bereich 104 zwischen der ersten 103 und der zweiten Kante 105 sowie die zur Mittenebene E normale flache Seite 106 erkennbar.

Fig. 3 zeigt ein erfindungsgemäßes Kettenglied 100, an dessen oberer Längsseite 101 ein Verschleißteil 107 angebracht ist. Das Verschleißteil 107 dient zur Erhöhung der Traktion zwischen Kettenglied 100, bzw. Gleitschutzkette, und Fahrbahn; wie der Name schon sagt dient es auch zum Schutz des Kettenglieds 100, indem es die bei der Nutzung auftretenden Kräfte aufnimmt und den Verschleiß der Kettenglieder verringert.

Das Verschleißteil 107 weist im vorliegenden Ausführungsbeispiel ein zur Form des Kettenglieds 100 gespiegeltes Profil auf. An der der oberen Längsseite 101 zugewandten Seite hat das Verschleißteil 107 ein halbrundes Profil. Die vom Kettenglied 100 wegweisende Seite des Verschleißteils 107 ist flach (bzw. normal auf die Mittenebene E des Kettenglieds 100 und im Wesentlichen parallel zur Längsmittelachse a des Kettenglieds 100) ausgeführt, wobei die wegweisende Fläche 108 an der vom Kettenglied 100 wegweisenden Seite im Wesentlichen parallel zur flachen Seite 106 im Inneren des Kettenglieds 100 im Bereich der Längsseiten 101, 102 orientiert ist.

Natürlich kann das Verschleißteil 107 auch eine andere Form haben, beispielsweise kann es polygonförmig, rund oder auch oval ausgeführt sein. Weiters ist es möglich, anstatt der dargestellten rechteckigen Verschleißteile mehrere einzelne Bolzen vorzusehen. Das Verschleißteil 107 kann weiters derart angeordnet sein, dass die wegweisende Fläche 108 nicht normal auf die Mittenebene E orientiert ist, sondern einen anderen Winkel kleiner 90° einschließt. Dies gilt auch für andere Verschleißteilformen wie Bolzen, Bügel und ähnliches.

Die Fig. 4a und 4b zeigen das Kettenglied 100 aus Fig. 3 in Schnittansichten in Richtung der Mittenebene E (Fig. 4a) und normal auf (Fig. 4b) die Mittenebene E, als Stirnansicht in Richtung der Längsmittelachse a. Fig. 4b zeigt dabei im Gegensatz zu Fig. 2b keine Schnittansicht; die Kettengliedbegrenzungen, die innerhalb des Kettenglieds 100 angeordnet und daher eigentlich nicht zu sehen sind, sind zum besseren Verständnis strichliert ausgeführt.

Das Verschleißteil 107 in Fig. 4b ist derart angeordnet, dass seine Symmetrieachse in der Mittenebene E des Kettenglieds 100 liegt. Allerdings ist es auch möglich, dass das Verschleißteil 107 (bzw. seine Symmetrieachse) gegen die Mittenebene E des Kettenglieds 100 geneigt ist. Eine solche Variante ist in Fig. 4b durch strichliert ausgeführte Verschleißteile 107 angedeutet. Durch eine solche Lösung kann das Gripverhalten des Kettenglieds 100 erweitert werden - kleine Verdrehungen des Kettenglieds bei übermäßiger Belastung der Kette würden dennoch durch ein sicheres Eingreifen der Verschleißteile 107 keine Veränderungen beim Gripverhalten der Kette zeitigen, in der das Kettenglied angeordnet ist.

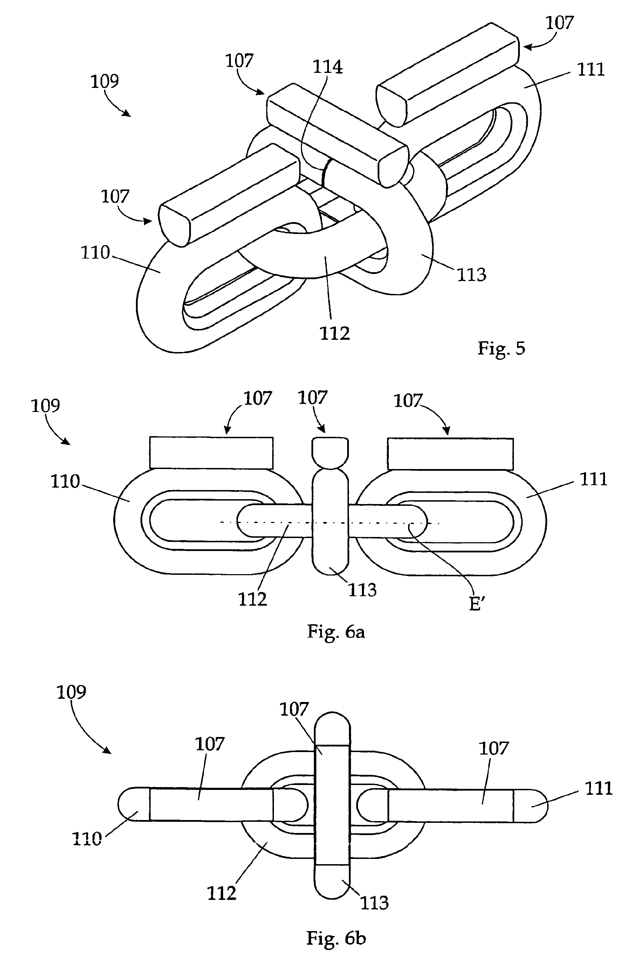

Die Fig. 5, 6a und 6b zeigen mehrere erfindungsgemäße Kettenglieder in der Ausführungsform von Fig. 3 (bzw. auch Fig. 4a und 4b) im Verbund einer Gleitschutzkette 109.

Dabei wird im Wesentlichen unterschieden zwischen stehenden und liegenden Kettengliedern. Diese Bezeichnung ist in Verbindung mit einer an einem Fahrzeugreifen angebrachten Kette zu verstehen - dabei befindet sich ein Teil der Kettenglieder parallel zur Oberfläche des Fahrzeugreifens knapp über dem Fahrzeugreifen (die "liegenden" Kettenglieder), während die zwischen den liegenden Kettengliedern angeordneten Kettenglieder von der Oberfläche des Fahrzeugreifens abstehen (die "stehenden" Kettenglieder).

In Fig. 5 handelt es sich bei allen dargestellten Kettengliedern um solche gemäß der Erfindung, also mit einem runden Außen- und einem eckigen Innenprofil. Die stehenden Kettenglieder 110, 111 weisen auch ein Verschleißteil 107 auf, wie es in den Fign. 3, 4a und 4b beschrieben ist.

In Fig. 5 sind zwei stehende Kettenglieder 110, 111 mit einem liegenden Kettenglied 112, das kein Verschleißteil 107 aufweist, verbunden. Durch die spezielle Ausführung der Kettenglieder, vor allem durch die eckige Ausführung des inneren Querschnittsbereichs, ist diese Verbindung sehr verdrehungssteif, während gleichzeitig durch die runde Ausführung der Außenseiten die Oberfläche des Fahrzeugreifens geschont wird. Um den Grip zwischen Fahrzeugreifen und Fahrbahn weiter zu verbessern, ist zwischen den stehenden Kettengliedern 110, 111 ein weiteres querstehendes Kettenglied 113 angeordnet, dass über das liegende Kettenglied 112 geschoben ist. Aus fertigungstechnischen Gründen wird das querstehende Kettenglied 113 auf das liegende Kettenglied 112 "aufgebogen" und dadurch fixiert, dass das Verschleißteil 107 aufgeschweißt wird. Daher weist das querstehende Kettenglied 113 an seiner oberen Längsseite einen Spalt (bzw. eine Schweißnaht) 114 auf.

Aus Fig. 6a, die eine Ansicht der Gleitschutzkette 109 in Richtung ihrer Mittenebene E (bzw. der Mittenebene E der stehenden Kettenglieder 110, 111) zeigt sich die Kontaktierung der Fahrbahn durch die Verschleißteile 107 zur Verbesserung der Traktion. Dank der speziellen Profilform der Kettenglieder 110, 111, 112, 113 kann sich die Gleitschutzkette 109 (bzw. die Kettenglieder gegeneinander) im Wesentlichen nur in der Mittenebene E' des liegenden Kettenglieds 112 bewegen - bei Belastung ist daher eine durchgehende Kontaktierung der Fahrbahn durch die Verschleißteile 107 ermöglicht, weil sich die Kettenglieder nicht, bzw. kaum, gegeneinander verdrehen können.

Fig. 6b zeigt eine Draufsicht auf die Gleitschutzkette 109 in Richtung der Mittenebene des liegenden Kettenglieds. Hier ist die rechteckige Form der Verschleißteile 107 gut erkennbar. Natürlich können die Verschleißteile 107 auch eine andere Form haben, beispielsweise können sie polygonförmig, rund oder auch oval ausgeführt sein. Weiters ist es möglich, anstatt der dargestellten rechteckigen Verschleißteile mehrere einzelne Bolzen vorzusehen.

### BEZUGSZEICHEN

- 100: Kettenglied
- 101: obere Längsseite
- 102: untere Längsseite
- 103: erste Kante
- 104: abgeschrägter Bereich
- 105: zweite Kante
- 106: flache Seite
- 107: Verschleißteil
- 108: wegweisende Fläche
- 109: Gleitschutzkette
- 110, 111: stehendes Kettenglied
- 112: liegendes Kettenglied
- 113: querstehendes Kettenglied
- 114: äußerer Querschnittsbereich
- 115: innerer Querschnittsbereich
- a: Längsmittelachse (des Kettenglieds)
- E: Mittenebene (des Kettenglieds)
- E': Mittenebene des liegenden Kettenglieds

## Patentansprüche

1. Kettenglied für eine Gleitschutzkette, wobei das Kettenglied als gerades Kettenglied mit im Wesentlichen ovaler Form mit einer oberen und einer unteren Längsseite ausgeführt ist und ein äußerer Querschnittsbereich (114) des Querschnitts des Kettenglieds (100) halbrund ausgeführt ist und ein innerer Querschnittsbereich (115) eckig ausgeführt ist, wobei der innere Querschnittsbereich eine sich beiderseits einer Mittenebene (E) erstreckende flache Seite (106) aufweist, die im Wesentlichen normal auf die Mittenebene (E) des Kettenglieds orientiert ist und die beiderseits von einer Kante (103, 105) begrenzt ist, **dadurch gekennzeichnet, dass** der innere Querschnittsbereich des Kettenglieds beiderseits einer Mittenebene (E) an einer ersten Kante (103) mit einem hinsichtlich der Mittenebene (E) abgeschrägten Bereich (104) an einen parallel zur Mittenebene (E) des Kettenglieds orientierten Bereich anschließt, wobei der abgeschrägte Bereich einen Winkel kleiner 90° mit der Mittenebene (E) einnimmt, und an den abgeschrägten Bereich an einer zweiten Kante (105) eine flache Seite (106) anschließt, die im Wesentlichen normal auf die Mittenebene (E) des Kettenglieds orientiert ist.

2. Kettenglied nach Anspruch 1, **dadurch gekennzeichnet, dass** an der oberen Längsseite (101) des Kettenglieds zumindest ein Verschleißteil (107) angeordnet ist.

3. Kettenglied nach Anspruch 2, **dadurch gekennzeichnet, dass** das Verschleißteil (107) an seiner dem Kettenglied zugewandten Seite ein halbrundes Profil aufweist und an seiner von dem Kettenglied abgewandten Seite eine flache Profilform aufweist, die im Wesentlichen normal auf die Mittenebene (E) des Kettenglieds orientiert ist.

4. Kettenglied nach Anspruch 2, **dadurch gekennzeichnet, dass** das zumindest eine Verschleißteil (107) in Form eines Bolzens ausgeführt ist.

5. Kettenglied nach einem der Ansprüche 2 bis 4, **dadurch gekennzeichnet, dass** das Verschleißteil in gegen eine Mittenebene des Kettenglieds geneigter Weise angeordnet ist.

6. Gleitschutzkette für Fahrzeugreifen mit einem Laufnetz, welches Kettenelementkonfigurationen enthält, wobei die Kettenelementkonfigurationen abwechselnd aus länglichen stehenden Kettengliedern und in Ausnehmungen derselben eingreifenden liegenden Kettengliedern bestehen, wobei stehend und liegend in Bezug auf eine Lauffläche des Fahrzeugreifens zu verstehen ist, **dadurch gekennzeichnet, dass** stehenden Glieder Kettenglieder gemäß einem der Ansprüche 1 bis 5 sind.

7. Gleitschutzkette nach Anspruch 6, **dadurch gekennzeichnet, dass** zumindest eines der stehenden Kettenglieder ein Verschleißteil (107) aufweist.

8. Gleitschutzkette nach Anspruch 6 oder 7, **dadurch gekennzeichnet, dass** über einem zwischen zwei stehenden Kettengliedern angeordneten liegenden Kettenglied ein weiteres querstehendes Kettenglied angeordnet ist, dessen Mittenebene normal auf die Mittenebene der stehenden Kettenglieder orientiert ist.

9. Gleitschutzkette nach Anspruch 8, **dadurch gekennzeichnet, dass** auf der oberen Längsseite des querstehenden Kettengliedes zumindest ein Verschleißteil angeordnet ist.

## Claims

1. A chain link for an anti-skid chain, whereby the chain link is designed as a straight chain link with an essentially oval shape with an upper and a lower side wall and an outer cross-sectional area (114) of the cross section of the chain link (100) has a half-round design and an inner cross-sectional area (115) has an angular design, wherein the inner cross-sectional area has a flat side (106) extending on both sides of a central plane (E), which is oriented essentially perpendicular to the central plane of the chain link and which is defined on both sides by an edge (103,105),
**characterized in that** the inner cross-sectional area of the chain link, on both sides of a central plane (E) on a first edge (103), is connected to an area (104) chamfered with regard to the central plane (E) on an area oriented parallel to the central plane (E) of the chain link, wherein the chamfered area forms an angle smaller than 90° with the central plane (E), and to the chamfered area on a second edge (105) is connected a flat side (106), which is oriented essentially perpendicular to the central plane (E) of the chain link.

2. The chain link in accordance with claim 1, **characterized in that** at least one part (107) subject to wear is arranged on the upper side wall (101) of the chain link.

3. The chain link in accordance with claim 2, **characterized in that** the part (107) subject to wear has a half-round profile on its side facing towards the chain link and has a flat profile on its side facing away from the chain link, which is oriented essentially perpendicular to the central plane (E) of the chain link.

4. The chain link in accordance with claim 2, **characterized in that** the at least one part (107) subject to wear is designed in the form of a pin.

5. The chain link in accordance with any of claims 2 to 4, **characterized in that** the part subject to wear is arranged in a manner inclined against a central plane of the chain link.

6. An anti-skid chain for vehicle tires with a chain mesh, which contains chain element configurations, whereon the chain element configurations consist alternately of oblong, vertical chain links and horizontal chain links meshing with recesses of same, wherein vertical and horizontal are defined in relation to the running surface of the vehicle tire, **characterized in that** vertical links are chain links in accordance with any of claims 1 to 5.

7. The anti-skid chain in accordance with claim 6, **characterized in that** at least one of the vertical chain links has a part (107) subject to wear.

8. The anti-skid chain in accordance with claim 6 or 7, **characterized in that** another transverse chain link, whose central plane is oriented perpendicular to the central plane of the vertical chain links, is arranged above a horizontal chain link arranged between two vertical chain links.

9. The anti-skid chain in accordance with claim 8, **characterized in that** at least one part subject to wear is arranged on the upper side wall of the transverse chain link.

## Revendications

1. Articulation de chaîne pour une chaîne antidérapante, sachant que l'articulation de chaîne est réalisée comme une articulation de chaîne droite présentant une forme sensiblement ovale avec un côté longitudinal supérieur et un côté longitudinal inférieur et une zone extérieure (114) de section de l'articulation de chaîne (100) est réalisée de manière demi-ronde et une zone intérieure de section (115) est réalisée de manière polygonale, sachant que la zone de section intérieure présente un côté plat (106) s'étendant de part et d'autre d'un plan médian (E), qui est orienté sensiblement normalement au plan médian (E) de l'articulation de chaîne et qui est délimité de part et d'autre par une arête (103, 105), **caractérisée en ce que** la zone de section intérieure de l'articulation de chaîne se raccorde de part et d'autre d'un plan médian (E) à une première arête (103) avec une zone (104) biseautée en ce qui concerne le plan médian (E) sur une zone orientée parallèlement au plan médian (E) de l'articulation de chaîne, sachant que la zone biseautée forme un angle inférieur à 90° avec le plan médian (E), et un côté plat (106) qui est orienté sensiblement normalement au plan médian (E) de l'articulation de chaîne, se raccorde sur la zone biseautée à une seconde arête (105).

2. Articulation de chaîne selon la revendication 1, **caractérisée en ce qu'**au moins une partie d'usure (107) est disposée sur le côté longitudinal supérieur (101) de l'articulation de chaîne.

3. Articulation de chaîne selon la revendication 2, **caractérisée en ce que** la partie d'usure (107) présente un profilé demi-rond sur son côté tourné vers l'articulation de chaîne et présente une forme de profilé plat sur son côté éloigné de l'articulation de chaîne, laquelle forme est orientée sensiblement normalement au plan médian (E) de l'articulation de chaîne.

4. Articulation de chaîne selon la revendication 2, **caractérisée en ce qu'**au moins une partie d'usure (107) est réalisée sous la forme d'un boulon.

5. Articulation de chaîne selon l'une quelconque des revendications 2 à 4, **caractérisée en ce que** la partie d'usure est disposée d'une manière inclinée contre un plan médian de l'articulation de chaîne.

6. Chaîne antidérapante pour des pneus de véhicule avec une structure réticulaire de mouvement qui contient des configurations d'élément de chaîne, sachant que les configurations d'élément de chaîne se composent alternativement d'articulations de chaîne verticales oblongues et d'articulations de chaîne horizontales s'engageant dans des évidements de celles-ci, sachant qu'il faut entendre vertical et horizontal par rapport à une surface de roulement du pneu de véhicule, **caractérisée en ce que** des articulations verticales sont des articulations de chaîne selon l'une quelconque des revendications 1 à 5.

7. Chaîne antidérapante selon la revendication 6, **caractérisée en ce qu'**au moins l'une des articulations de chaîne verticales présente une partie d'usure (107).

8. Chaîne antidérapante selon la revendication 6 ou 7, **caractérisée en ce qu'**une autre articulation de chaîne perpendiculaire, dont le plan médian est orienté normalement au plan médian des articulations de chaîne verticales, est disposée au-dessus d'une articulation de chaîne horizontale disposée entre deux articulations de chaîne verticales.

9. Chaîne antidérapante selon la revendication 8, **caractérisée en ce qu'**au moins une partie d'usure est disposée sur le côté longitudinal supérieur de l'articulation de chaîne perpendiculaire.
